# EUROPÄISCHE PATENTANMELDUNG

(11) **EP 4 008 499 A1**
(43) Veröffentlichungstag der Anmeldung: **08.06.2022**
(21) Anmeldenummer: 21212191.7
(22) Anmeldetag: 03.12.2021
(51) Int. Cl.: B25J 9/16

(54) **VERFAHREN UND VORRICHTUNG ZUM ENTNEHMEN EINES NACHGIEBIGEN GEBINDES AUS EINER MEHRZAHL AN GEBINDEN**

(30) Priorität: 04.12.2020 DE 102020132318
(71) Anmelder: AZO Holding GmbH, 74706 Osterburken (DE)
(72) Erfinder: Schmitt, Tobias, 74706 Osterburken (DE); Steffen, Günter, 74747 Ravenstein (DE); Pahl, Frank, 74748 Höpfingen (DE); Garbe, Christoph, 69124 Heidelberg (DE)
(74) Vertreter: Lichti - Patentanwälte Partnerschaft mbB

(57) **Zusammenfassung**

Es werden ein Verfahren und eine Vorrichtung zum Entnehmen eines nachgiebigen Gebindes aus einer Mehrzahl an Gebinden vorgeschlagen. Dabei sieht das Verfahren vor, Bilddaten von einem jeweiligen Gebinde zu erzeugen und durch Anwendung von wenigstens einem trainierten neuronalen Netzwerk auf die Bilddaten wenigstens eine Positionsinformation des zu entnehmenden Gebindes zu bestimmen. Die Positionsinformation wird an einen programmtechnisch eingerichteten Manipulator übermittelt, welcher das Gebinde anschließend entnimmt. In vorrichtungstechnischer Hinsicht ist eine Steuereinheit vorgesehen, welche zur Durchführung des vorgenannten Verfahrens ausgebildet ist. Darüber hinaus betrifft die Erfindung ein Computerprogramm mit Programmcodemitteln, welches eingerichtet ist, die Schritte des Verfahrens der vorgenannten Art durchzuführen.

## Beschreibung

Die Erfindung betrifft ein Verfahren zum Entnehmen eines nachgiebigen Gebindes aus einer Mehrzahl an Gebinden, umfassend die folgenden Schritte:
- Bereitstellen der Mehrzahl an Gebinden,
- Erzeugen von Bilddaten von wenigstens einem Gebinde der Mehrzahl an Gebinden,
- Bestimmen von wenigstens einer Positionsinformation des zu entnehmenden Gebindes,
- Übermitteln der Positionsinformation des zu entnehmenden Gebindes an einen programmtechnisch eingerichteten Manipulator, und
- Entnehmen des Gebindes mittels des Manipulators.

Darüber hinaus bezieht sich die Erfindung auf eine Vorrichtung zum Entnehmen eines nachgiebigen Gebindes aus einer Mehrzahl an Gebinden mit wenigstens einer Kamera zum Erzeugen von Bilddaten von wenigstens einem Gebinde der Mehrzahl an Gebinden, einem programmtechnisch eingerichteten Manipulator zum Entnehmen des Gebindes und einer Steuereinheit, welche mit der Kamera und dem Manipulator verbunden ist.

Ferner betrifft die Erfindung ein Computerprogramm mit Programmcodemitteln.

Eine Vorrichtung zum Entnehmen von formstabilen Behältern, in welchen verschiedene pulver- bzw. partikelförmige, fließfähige Feststoffkomponenten aufgenommen sind und welche häufig mit je einer Dosiereinheit ausgestattet sind, aus einer Lagerstation mittels eines Manipulators, z.B. in Form eines Roboters, um einen gewünschten Anteil einer jeweiligen Feststoffkomponente einem jeweiligen Behälter entnehmen zu können und einer Weiterverarbeitungsstation, wie z.B. einer Dosierstation, welche mit den Dosiereinheiten der Behälter zusammenwirkt, zuzuführen, ist beispielsweise aus der DE 10 2020 000 647 B3 bekannt. Dabei gelangen Sensoreinrichtungen zum Einsatz, um die Position eines jeweiligen Behälters, z.B. anhand der Ausrichtung der Dosiereinheit des jeweiligen Behälters, zu erfassen, wobei der Manipulator mit der Sensoreinrichtung in Wirkverbindung steht, um anlässlich des Überführens eines jeweiligen Behälters von einer Ein-/Ausschleuseinrichtung an die Lagerstation bzw. von letzterer an die Dosierstation den Behälter gemäß einer vorgegebenen Position zu ergreifen bzw. abzustellen oder zu übergeben. Bei den fließfähigen Feststoffen kann es sich z.B. um beliebige Chemikalien einschließlich Bestandteilen von Farben, wie Farbstoffe, Pigmente etc., Kunststoffgranulate, Lebensmittel, pharmazeutische Wirkstoffen, Baustoffe und dergleichen, handeln.

Die DE 10 2014 016 069 A1 offenbart die Entnahme eines Artikels aus einem Stapel gleichartiger Artikel mittels der Hand eines Roboters. Zur Ermittlung der Positionsinformation des zu entnehmenden Artikels werden dreidimensionale Bilddaten zusammen mit zweidimensionalen Bilddaten des Stapels rein analytisch punktweise dahingehend ausgewertet, welche Punkte der Bilddaten zu dem zu entnehmenden Artikel gehören. Aus den zu diesem Artikel gehörenden Punktdaten wird im Anschluss eine Ansteuerung für die Hand des Roboters ermittelt, um den Artikel dem Stapel zu entnehmen.

In der DE 10 2020 111 271 A1 werden zum Aufgreifen eines formstabilen, starren Objektes, beispielsweise eines Bechers, Bilddaten dieses Objektes ausgewertet, um dessen dreidimensionale Raumposition und dessen dreidimensionalen Rotationszustand abzuschätzen. Die Auswertung der Bilddaten erfolgt über ein neuronales Netzwerk, das mit einer Vielzahl unterschiedlicher Raumpositionen und Rotationszuständen dieses formstabilen, starren Objektes trainiert wurde. Die DE 10 2019 122 790 A1 beschreibt ein hierzu im Wesentlichen identisches Verfahren, wobei die Bilddaten des formstabilen, starren Objektes durch eine Kamera am Handgelenk eines Roboters erzeugt werden. Diese Bilddaten werden ebenfalls mittels eines mit den formstabilen, starren Objekten trainierten neuronalen Netzwerks ausgewertet, um die dreidimensionale Raumposition und den dreidimensionalen Rotationszustand des Objektes zu bestimmen.

Die bekannten Verfahren zum Entnehmen formstabiler, starrer Objekte setzen zwingend eine entsprechend formstabile, starre Geometrie der Objekte voraus und weisen daher ein enges Anwendungsspektrum auf. Dies gilt umso mehr bei den bekannten Verfahren, die auf trainierten neuronalen Netzwerken basieren, da der hierfür zwingend notwendige Trainingsprozess auf einer unveränderlichen Geometrie des Objektes beruht, welche insbesondere in Form eines CAD-Modells eingelesen werden kann. Die bekannten Verfahren würden sich daher als besonders fehleranfällig erweisen, wenn das zu entnehmende Objekt bereits eine geringfügig veränderte Geometrie aufwiese.

Darüber hinaus sind aus dem Stand der Technik gattungsgemäße Verfahren und Vorrichtungen zum Entnehmen von nachgiebigen Gebinden, wie Säcken, Beuteln und dergleichen, bekannt, bei welchen eine Kamera Bilddaten erzeugt, wobei die Bilddaten daraufhin von einer Steuereinheit durch einfache Verfahren der Bildverarbeitung ausgewertet werden. Dabei wird beispielsweise die Position eines zu entnehmenden Gebindes bestimmt, welches anschließend mittels des Manipulators entnommen wird. Diesbezüglich werden zur Bildverarbeitung beispielsweise Grenzwertabfragen verwendet, um die Umrisse eines Gebindes zu erkennen, welche im Gegensatz zu dem Umriss eines formstabilen Behälters nicht identisch sind, sondern aufgrund unterschiedlicher Formen der Gebinde infolge ihrer Nachgiebigkeit sowie unterschiedlicher Inhaltsstoffe, Füllgrade etc. teils erheblich voneinander abweichen können.

Letztere Verfahren setzen zwingend voraus, dass die bereitgestellte Mehrzahl an nachgiebigen Gebinden immer in einer vordefinierten Anordnung bereitgestellt wird, was in der praktischen Anwendung selten gegeben ist, da üblicherweise einzelne oder mehrere Gebinde nicht akkurat gestapelt und/oder transportbedingt bewegt werden und daher von der geforderten Anordnung abweichen. Diese Abweichungen führen zu Störungen eines automatisierten Entnahmeprozesses mittels des Manipulators, bei welchen im schlimmsten Falle Gebinde durch eine fehlerhafte Ansteuerung des Manipulators beschädigt werden. Dies gilt insbesondere, wenngleich nicht ausschließlich, für Anordnungen einer Mehrzahl an nachgiebigen Gebinden, bei welchen zumindest einige Gebinde einander überlappen. In diesem Fall ist eine zuverlässige Entnahme einzelner Gebinde mittels der bekannten Verfahren nicht möglich. Darüber hinaus lassen sich mittels der bekannten Verfahren neuartige Anordnungen von nachgiebigen Gebinden, wie beispielsweise unterschiedliche Stapelarten, allenfalls aufwändig und benutzerdefiniert im Vorfeld der eigentlichen Anwendung einprogrammieren, was das Anwendungsspektrum der bekannten Verfahren stark einschränkt.

Der Erfindung liegt daher die Aufgabe zugrunde, ein Verfahren und eine Vorrichtung zum Entnehmen eines nachgiebigen Gebindes aus einer Mehrzahl an Gebinden der eingangs genannten Art auf einfache und kostengünstige Weise dahingehend weiterzubilden, dass unter zumindest weitgehender Vermeidung der vorgenannten Nachteile eine zuverlässige, beschädigungsfreie Entnahme der nachgiebigen Gebinde sichergestellt wird, insbesondere auch im Falle einer teilweise einander überlappenden Anordnung der Gebinde. Sie ist ferner auf ein Computerprogramm zur Durchführung eines solchen Verfahrens gerichtet.

In verfahrenstechnischer Hinsicht wird diese Aufgabe erfindungsgemäße bei einem Verfahren der eingangs genannten Art dadurch gelöst, dass das Bestimmen der Positionsinformation des zu entnehmenden Gebindes durch die Anwendung von wenigstens einem trainierten neuronalen Netzwerk auf die Bilddaten der Mehrzahl an Gebinden erfolgt.

In vorrichtungstechnischer Hinsicht sieht die Erfindung zur Lösung dieser Aufgabe bei einer Vorrichtung der eingangs genannten Art ferner vor, dass die Steuereinheit zur Durchführung des erfindungsgemäßen Verfahrens ausgebildet ist. Darüber hinaus schlägt die Erfindung zur Lösung dieser Aufgabe ein Computerprogramm mit Programmcodemitteln vor, welches eingerichtet ist, die Schritte eines Verfahrens der vorgenannten Art durchzuführen, insbesondere auf einer Steuereinheit einer Vorrichtung der vorgenannten Art.

Die Erfindung basiert auf der Grundüberlegung, dass durch die Anwendung des trainierten neuronalen Netzwerks auf die Bilddaten der Mehrzahl an nachgiebigen Gebinden eine Möglichkeit geschaffen ist, auch bei einer bislang noch unbekannten Anordnung der Mehrzahl an Gebinden - sei es aufgrund einer anderen Stapelung der Gebinde, sei es infolge eines Verrutschens zumindest einiger Gebinde oder dergleichen - eine verlässliche Bestimmung der Positionsdaten der Gebinde zu ermöglichen. Dies gilt insbesondere auch für eine Anordnung von einander teilweise überlappender Gebinde. Das erfindungsgemäße Verfahren vermag auf diese Weise sein Anwendungsspektrum gegenüber den bislang bekannten Verfahren erheblich zu vergrößern und macht insbesondere eine individuelle Programmierung der Steuereinheit des Manipulators für eine jeweilige Anordnung der Mehrzahl an Gebinden entbehrlich. Darüber hinaus erweist sich das erfindungsgemäße Verfahren aufgrund der Anwendung des trainierten neuronalen Netzwerks auch bei bekannten Anordnungen von Gebinden als weniger fehleranfällig, da auch nur einzelne Abweichungen hiervon berücksichtigt werden können.

Im Sinne der Erfindung bezeichnet der Begriff "Gebinde" insbesondere eine nachgiebige Verpackung für pulver- bzw. partikelförmige, fließfähige Feststoffkomponenten, z.B. in Form von Säcken, Beuteln oder dergleichen. Bei den fließfähigen Feststoffen kann es sich beispielsweise um beliebige Chemikalien einschließlich Bestandteilen von Farben, wie Farbstoffe, Pigmente etc., Kunststoffgranulate, Lebensmitte, pharmazeutische Wirkstoffe, Baustoffe und dergleichen, handeln. Bei der Mehrzahl an nachgiebigen Gebinden kann es sich um einen Sackstapel mit mehreren, gegebenenfalls auch zu jeweils unterschiedlichen Füllgraden befüllten Säcken handeln, welche einzeln mittels des Manipulators entnommen werden, wobei der Sackstapel z.B. von einer Palette aufgenommen sein kann.

Vorzugsweise umfassen die Bilddaten von wenigstens einem Gebinde der Mehrzahl an Gebinden
- wenigstens eine zweidimensionale Bildinformation des Gebindes, insbesondere wenigstens ein Kamerabild des Gebindes, und/oder
- wenigstens eine dreidimensionale Bildinformation des Gebindes, insbesondere eine dreidimensionale Punktewolke. Bilddaten im Sinne der Erfindung können folglich beispielsweise zumindest zweidimensionale (Raum-)Informationen der Mehrzahl an Gebinden sowie Videodaten umfassen. Die Bilddaten können sich dabei insbesondere auf ein vordefiniertes, wenigstens zweidimensionales, vorzugsweise dreidimensionales, Koordinatensystem beziehen. Im Rahmen des erfindungsgemäßen Verfahrens dienen die Bilddaten funktionell insbesondere als Eingabeparameter für das wenigstens eine trainierte neuronale Netzwerk.

Um einem Benutzer den Verfahrensverlauf zu veranschaulichen und gegebenenfalls eine Korrekturmöglichkeit bereitzustellen, werden die Bilddaten von wenigstens einem Gebinde der Mehrzahl an Gebinden und/oder die Positionsinformation des zu entnehmenden Gebindes in vorteilhafter Ausgestaltung auf einer Ausgabeeinrichtung, insbesondere auf einem Display, ausgegeben, wobei das Display mit der Steuereinrichtung, z.B. drahtgebunden oder drahtlos, verbunden sein kann. Um Benutzereingaben zu ermöglichen, kann das Display z.B. als Touchscreen ausgebildet oder mit einer Eingabeeinrichtung, wie einer Maus, einem Keyboard oder dergleichen, verbunden sein.

Die Positionsinformation des zu entnehmenden Gebildes enthält vorzugsweise wenigstens eine Information aus der folgenden Gruppe: Raumposition, Lage, Position des Schwerpunktes, Ausdehnung, Geometrie, vorzugsweise zweidimensionale Projektion des Gebindes, Rotationszustand des Gebindes in Bezug auf wenigstens eine vordefinierte Referenzachse, Flächennormale des Gebindes, Position und/oder Lage einer vordefinierten Seite des Gebindes, insbesondere einer Boden-und/oder Ober- und/oder Befüllseite des Gebindes, Lage und Verlauf einer Verschlussnaht, Überlappung des Gebindes mit einem anderen Gebinde, Dicke, Füllgrad des Gebindes.

Sämtliche räumlichen Informationen des Gebindes, wie beispielsweise dessen Position, Lage und/oder Ausdehnung, beziehen sich zweckmäßigerweise auf dasselbe, insbesondere dreidimensionale, Koordinatensystem, um die vorstehend genannten Informationen zueinander in Beziehung zu setzen. Dabei kann die durch das wenigstens eine trainierte neuronale Netzwerk bestimmte Geometrie bzw. der Umriss des Gebindes durch eine geometrische Figur, wie beispielsweise durch ein Mehreck, insbesondere durch ein Rechteck, approximiert werden, um die weiteren Schritte des Verfahrens zu vereinfachen.

Die Position des Schwerpunktes des Gebindes kann beispielsweise anhand der Geometrie des Gebindes bestimmt werden. Insoweit können mehrere der vorstehend genannten Informationen durch die Anwendung eines trainierten neuronalen Netzwerks bestimmt werden. Weiterentwicklungen der Erfindung sehen beispielsweise vor, dass bei der Berechnung des Schwerpunktes des Gebindes dessen Füllgrad berücksichtigt wird, was mathematisch durch eine entsprechende Gewichtung erfolgen kann. Da vorzugsweise die dreidimensionalen Koordinaten des Schwerpunktes des Gebindes für die Ansteuerung des Manipulators verwendet werden, wird eine sichere Entnahme ermöglicht. Die Bestimmung der zweidimensionalen Projektion des Gebindes erfolgt vorzugsweise in Relation zur Kameraebene; diese Information kann zur Berechnung der dreidimensionalen Ausdehnung des Gebindes verwendet werden, um insbesondere eine Überlappung mit anderen Gebinden als weitere Information im Sinne einer Positionsinformation zu ermitteln und bei der Entnahme des Gebindes zu berücksichtigen.

Der Rotationszustand des Gebindes kann insbesondere in Relation zu den Achsen des vorzugsweise dreidimensionalen Koordinatensystems und/oder zu einer vordefinierten Referenzlage des Gebindes berechnet werden. Die bestimmte Flächennormale des Gebindes kann wenigstens einem Teil des Gebindes zugeordnet sein, vorzugsweise im Bereich von dessen Schwerpunkt, um eine einfache Entnahme des Gebindes zu ermöglich. Die Flächennormale ist beispielsweise durch ein dreidimensionales Vektorprodukt bestimmbar.

Durch die Bestimmung der Lage und/oder Position einer vordefinierten Seite des Gebindes kann gewährleistet werden, dass dieses bei seiner Entnahme nicht beschädigt wird, wenn beispielsweise vorgesehen ist, dass das Gebinde derart entnommen wird, dass seine Bodenseite nach unten weist. Daneben kann durch die Bestimmung einer Befüllseite des Gebindes als Positionsinformation gewährleistet werden, dass das Gebinde stets derart entnommen wird, dass seine Befüllseite nach oben weist. Dadurch wird ein unbeabsichtigtes Entleeren des Gebindes bei dessen Entnahme vermieden. Dies gilt entsprechend für eine Bestimmung der Verschlussnaht des Gebindes, welche bei bekannten Gebinden beispielsweise als Schweiß-, Klebe- und/oder Nähstelle ausgestaltet sein kann. Zudem kann durch die Feststellung einer Überlappung eines Gebindes mit anderen Gebinden eine Ermittlung dahingehend erfolgen, dass ein ein anderes Gebinde überlappendes Gebinde zuerst der Mehrzahl an Gebinden entnommen wird, um bei der Entnahme möglichst effizient vorzugehen und eine Beschädigung der Gebinde zu vermeiden, wonach unmittelbar danach oder nach der Entnahme weitere Gebinde das überlappte Gebinde entnommen werden kann.

Wie bereits erwähnt, kann die durch das wenigstens eine trainierte neuronale Netzwerk bestimmte Positionsinformation vorzugsweise auf der Ausgabeeinrichtung dargestellt werden, um dem Benutzer eine Korrekturmöglichkeit zu bieten.

Gemäß einer vorteilhaften Ausgestaltung der Erfindung kann vorgesehen sein, dass wenigstens zwei trainierte neuronale Netzwerke ausgebildet sind, wobei eine erste Positionsinformation durch die Anwendung eines ersten trainierten neuronalen Netzwerks auf die Bilddaten der Mehrzahl an Gebinden und eine zweite Positionsinformation durch die Anwendung eines zweiten trainierten neuronalen Netzwerks auf die Bilddaten der Mehrzahl an Gebinden bestimmt werden. Dabei können insbesondere einerseits die Lage des zu entnehmenden Gebindes als erste Positionsinformation durch das erste trainierte neuronale Netzwerk und/oder andererseits die Lage der Verschlussnaht des zu entnehmenden Gebindes als zweite Positionsinformation durch das zweite trainierte neuronale Netzwerk bestimmt werden.

Auf der Grundlage der Positionsinformation des zu entnehmenden Gebindes wird vorzugsweise eine Weginformation des Manipulators bestimmt, um das Gebinde zu entnehmen. Im Sinne der Erfindung umfasst die Weginformation des Manipulators insbesondere den direkten, dreidimensionalen Weg des Manipulators von seiner aktuellen räumlichen Position bis zum Schwerpunkt des zu entnehmenden Gebindes als bestimmte Positionsinformation. Auf diese Weise kann das jeweilige Gebinde mit einer optimalen Greifposition des Manipulators auf direktem Wege entnommen werden, was die Verfahrensgeschwindigkeit erhöht. Darüber hinaus kann die Weginformation einen räumlichen Weg beinhalten, entlang dessen das Gebinde nach seiner Entnahme transportiert werden soll, beispielsweise für eine weitere Bearbeitung desselben.

In weiterhin vorteilhafter Ausgestaltung kann vorgesehen sein, dass das entnommene Gebinde mittels des Manipulators auf der Grundlage der Weginformation in eine vordefinierte Lage, insbesondere in eine vordefinierte Rotationslage, gebracht wird. Das Gebinde kann beispielsweise nach seiner Entnahme so rotiert und/oder verschwenkt werden, dass die Bodenseite des Gebindes im Wesentlichen vertikal nach unten weist, um ein versehentliches Entleeren des Gebindes während und nach seiner Entnahme zu vermeiden. Darüber hinaus kann dadurch, dass das Gebinde nach seiner Entnahme die vordefinierte Lage einnimmt, eine besonders effiziente weitere Bearbeitung des Gebindes nach dessen Entnahme erfolgen, wobei es z.B. in einer vorgegebenen Relativposition in Bezug auf eine Weiterverarbeitungsstation, wie z.B. einer Entleereinrichtung, an diese übergeben werden kann. Als besonders vorteilhaft kann es sich hierbei erweisen, wenn jedes Gebinde nach seiner Entnahme in dieselbe vordefinierte Lage gebracht wird.

Um den von dem Gebinde aufgenommenen Inhalt unmittelbar nach seiner Entnahme zeitnah weiterverarbeiten zu können, kann das entnommene Gebinde z.B. einer Entleereinrichtung zugeführt werden, was insbesondere in einer vordefinierten Lage geschehen kann, bei welcher beispielsweise die Verschlussnaht des Gebindes nach dessen Zuführung zur Entleereinrichtung unmittelbar in die Nähe eines Messers der Entleereinrichtung zur Öffnung des Gebindes angeordnet wird. Hierdurch kann der Inhalt des Gebindes besonders zeitsparend weiterverarbeitet und eine restmengenoptimierte Öffnung des Gebindes erreicht werden.

Das erfindungsgemäße Verfahren kann nach dem Entnehmen des Gebindes selbsttätig wiederholt werden, um sämtliche Gebinde der Mehrzahl an Gebinden zu entnehmen. Auf diese Weise ist eine vollständige Entnahme der Mehrzahl an Gebinden sowie gegebenenfalls eine Überführung derselben an eine Weiterverarbeitungsstation, wie z.B. an eine Entnahmeeinrichtung der vorbeschriebenen Art, insbesondere ohne eine Benutzereingabe möglich. Im Rahmen der Bestimmung der Positionsinformation kann in diesem Zusammenhang zweckmäßigerweise vorgesehen sein, dass auch die Anzahl der Gebinde bestimmt wird. Falls kein Gebinde bestimmbar ist, kann das Verfahren abgebrochen und insbesondere ein Signal ausgegeben werden, beispielsweise in Form eines Signallichtes und/oder eines Signaltons, um auf die erfolgte vollständige Entnahme der Mehrzahl an Gebinden hinzuweisen.

Nach der Anwendung des wenigstens einen trainierten neuronalen Netzwerks auf die Bilddaten der Mehrzahl an Gebinden und der Bestimmung der Positionsinformation(en) kann vorzugsweise ein Fehlerparameter bestimmt werden, welcher der Erkennungsgenauigkeit der bestimmten Positionsinformation(en) des zu entnehmenden Gebindes entspricht. Der Fehlerparameter kann insoweit ein Maß für die Unsicherheit der bestimmten Positionsinformation darstellen. Im Sinne der Erfindung kann der Fehlerparameter auch als Übereinstimmungsparameter ausgestaltet sein, welcher der Erkennungsgenauigkeit der bestimmten Positionsinformation des zu entnehmenden Gebindes entspricht und welcher somit funktionell komplementär zu einem Fehlerparameter sein kann.

Der Fehlerparameter kann nach seiner Bestimmung mit einem vordefinierten Grenzwert verglichen werden, wobei für den Fall, dass der Fehlerparameter kleiner ist als der Grenzwert, das Verfahren fortgesetzt wird, während für den Fall, dass der Fehlerparameter größer ist als der Grenzwert, das Verfahren in einen Lernmodus umgeschaltet wird. Ein solcher Lernmodus umfasst zweckmäßigerweise die folgenden Schritte:
- Einlesen einer Positionsinformation des zu entnehmenden Gebindes,
- Ändern von Parametern des neuronalen Netzwerks durch Rückwärtsspeisen des neuronalen Netzwerks mit einem Differenzparameter, welcher basierend auf der bestimmten Positionsinformation und der eingelesenen Positionsinformation bestimmt wird, und
- Entnehmen des Gebindes auf der Grundlage der eingelesenen Positionsinformation mittels des Manipulators.

Auf diese Weise wird gewährleistet, dass nur Gebinde der Mehrzahl an Gebinden entnommen werden, deren Positionsinformationen durch das wenigstens eine trainierte neuronale Netzwerk hinreichend genau bestimmt worden sind. Durch den Lernmodus wird eine Möglichkeit geschaffen, das wenigstens eine trainierte neuronale Netzwerk während seines Einsatzes zu verbessern, insbesondere hinsichtlich neuer Anordnungen von Gebinden.

Das Einlesen der Positionsinformation des zu entnehmenden Gebindes kann beispielsweise durch eine Benutzereingabe erfolgen, bei welcher z.B. die Positionsinformation als eine dem zu entnehmenden Gebinde angenäherte geometrische Fläche, z.B. in Form eines Rechtecks, als dessen Raumposition eingelesen wird. Auf diese Weise können insbesondere mit manuell ergänzten Lagedaten des Gebindes als Positionsinformationen, was auch als "Taggen" bezeichnet wird, dem neuronalen Netzwerk bislang unbekannte, neuartige Zustände der Gebinde eingelernt werden, um die Erkennung auch von künftigen, ähnlichen Zuständen von Gebinden zu verbessern.

Im Sinne der Erfindung vermag der Differenzparameter als Maß für den Unterschied zwischen der durch das wenigstens eine trainierte neuronale Netzwerk bestimmten Positionsinformation und der eingelesenen Positionsinformation zu dienen. Durch das Rückwärtsspeisen mit dem Differenzparameter kann eine Anpassung des Datenbestandes des wenigstens einen neuronalen Netzwerks erfolgen, insbesondere im Zusammenhang mit einer durch eine Benutzereingabe eingelesenen Positionsinformation des zu entnehmenden Gebindes.

In diesem Zusammenhang kann vorzugsweise vorgesehen sein, dass das wenigstens eine trainierte neuronale Netzwerk mit Soll-Trainingsdaten trainiert wird, wobei die Soll-Trainingsdaten Bilddaten von wenigstens einem Gebinde der Mehrzahl an Gebinden und hiermit korrespondierenden vordefinierte Positionsinformationen von jeweils zu entnehmenden Gebinden umfassen. Hierbei können zweckmäßigerweise die folgenden Trainingsschritte zum Einsatz gelangen:
- Vorwärtsspeisen des neuronalen Netzwerks mit den Soll-Trainingsdaten unter Erhalt einer ermittelten Positionsinformation des zu entnehmenden Gebindes,
- Bestimmen eines Fehlervektors zwischen der ermittelten Positionsinformation und der vordefinierten Positionsinformation, und
- Ändern von Parametern des neuronalen Netzwerks durch Rückwärtsspeisen des neuronalen Netzwerks mit dem Fehlervektor, falls ein Qualitätsparameter des Fehlervektors einen vordefinierten Wert unterschreitet.

Die vordefinierten Positionsinformationen dienen dabei als ideale Ergebnisse, welche durch die Anwendung des trainierten neuronalen Netzwerks auf die mit den vordefinierten Positionsinformationen korrespondierenden Bilddaten erzielt werden sollen. Insbesondere bei erstmaliger Anwendung des neuronalen Netzwerks, welches sich folglich in einem (noch) nicht trainierten Zustand befindet, werden in der Regel unbefriedigende Ergebnisse erzielt. Für diesen Fall werden durch das Rückwärtsspeisen des neuronalen Netzwerks mit dem Fehlervektor sukzessive die Parameter des neuronalen Netzwerks derart geändert, dass eine künftige Bestimmung der Positionsdaten bei der Anwendung des neuronalen Netzwerks auf dieselben und/oder auf ähnliche Bilddaten verbessert wird, ähnlich zu dem bereits vorstehend erwähnten Lernmodus. Im Sinne der Erfindung kann hierbei jeder Positionsinformation jeweils ein Fehlervektor zugeordnet sein, wobei der Fehlervektor aber auch mehreren Positionsinformationen zugeordnet sein kann. Der Qualitätsparameter dient, ähnlich wie der in Zusammenhang mit dem Lernmodus angesprochene Differenzparameter, als Maß für die Erkennungsgenauigkeit des neuronalen Netzwerks. Vorzugsweise wird das Trainingsverfahren so lange wiederholt, bis der Qualitätsparameter den vordefinierten Wert überschreitet. Um eine stetige Verbesserung des eingesetzten neuronalen Netzwerks vornehmen zu können, kann vorteilhafterweise vorgesehen sein, den Trainingsmodus in jeder Phase des Verfahrens, beispielsweise durch eine Benutzereingabe, aktivieren zu können.

Die Soll-Trainingsdaten umfassen vorzugsweise Bilddaten und vordefinierte Positionsinformation einer Mehrzahl an Gebinden in deren jeweils aktuellen Geometrie, wobei die Bilddaten insbesondere mittels Kamerabilder erzeugt worden sind, in welchen die nachgiebigen Gebinde statistisch unterschiedliche Geometrien bzw. Formen besitzen, z.B. teilweise gestaucht, eingedrückt, geknickt, gedehnt oder anderweitig verformt sind.

Die zu dem Gebinde korrespondierende, vordefinierte Positionsinformation der Soll-Trainingsdaten kann aus mindestens einer Benutzereingabe bestimmt werden und insbesondere ein Mitglied der folgenden Gruppe umfassen: Umriss, Raumposition und/oder Rotationszustand des zu entnehmenden Gebindes, Position einer Verschlussnaht, einer Oberseite und/oder einer Unterseite des zu entnehmenden Gebindes. Vorzugsweise erfolgt die Benutzereingabe in Bezug auf Bilddaten von wenigstens einem Gebinde, wobei die Benutzereingabe insbesondere die Markierung der vorstehend genannten Parameter in den Bilddaten beinhaltet. Die Markierung erfolgt beispielsweise durch die Bestimmung eines benutzerdefinierten Rechtecks, das das in den Bilddaten gezeigte Gebinde umgrenzt oder zumindest approximiert. Die Markierung der Verschlussnaht, der Oberseite und/oder der Unterseite des zu entnehmenden Gebindes erfolgt beispielsweise durch eine benutzerdefiniert platzierte Linie in den Bilddaten, die mit der Verschlussnaht, der Oberseite und/oder der Unterseite des zu entnehmenden Gebindes korrespondiert. Dieser Vorgang wird auch als "Labelling" und die benutzerdefinierten Markierungen als "Labels" bezeichnet. Auf diese Weise können besonders einfach und effektiv auch aufgrund der Nachgiebigkeit der Gebinde veränderte Geometrien derselben im Rahmen des Trainings des mindestens einen neuronalen Netzwerks trainiert werden. Dies betrifft insbesondere Fälle, in denen die nachgiebigen Gebinde, insbesondere Säcke, je nach Art der Stapelung, Anordnung oder des Füllungsgrades unterschiedliche Geometrien annehmen, gleichwohl aber von dem mindestens einen trainierten neuronalen Netzwerk erkennbar sind. Dadurch kann die Bestimmung der Positionsinformation des zu entnehmenden - nachgiebigen - Gebindes wesentlich verbessert werden, insbesondere auch hinsichtlich einer Bestimmung der Füllnaht eines nachgiebigen Gebindes.

Wie bereits erwähnt, können die nachgiebigen Gebinde z.B. nach Art von Säcken ausgestaltet sein, welche in ihrer Mehrzahl vorzugsweise in einem Stapel angeordnet sind. Die Steuereinheit der erfindungsgemäßen Vorrichtung kann mit der Kamera und/oder mit dem Manipulator drahtgebunden und/oder drahtlos verbunden sein. Die Ausgabevorrichtung kann z.B. als Display ausgestaltet und vorzugsweise mit einem Touchscreen oder anderen Eingabeeinrichtungen versehen sein, um in einfacher Weise Benutzereingaben zu ermöglichen.

Zur räumlichen Ein- und/oder Abgrenzung der Mehrzahl an Gebinden kann ein Gehäuse zur Aufnahme der Mehrzahl an Gebinden vorgesehen sein, in welches z.B. eine mit der Mehrzahl an Gebinden bestückte Palette eingestellt werden kann und welches insbesondere eine Beleuchtungseinrichtung aufweist. Das Gehäuse kann beispielsweise mehrere, insbesondere vier, die Mehrzahl an Gebinden umgebende Säulen umfassen, um einen optisch deutlich gekennzeichneten Bereich der Vorrichtung zu schaffen. Die Beleuchtungseinrichtung kann wenigstens eine in Richtung der in das Gehäuse eingebrachten Mehrzahl an Gebinden ausgerichtete Lichtquelle aufweisen, welche vorzugsweise derart ausgestaltet ist, um die Mehrzahl an Gebinden möglichst homogen zu beleuchten, um das Erzeugen der Bilddaten zu verbessern. Durch die Beleuchtungseinrichtung können außerdem störende optische Einflüsse eliminiert werden, wie sie beispielsweise durch wechselndes Tageslicht, wechselnde Hallenbeleuchtung, Lichter von Signal-, Warn- und Fahrzeuglampen oder dergleichen hervorgerufen werden. Gemäß einer Weiterbildung der Erfindung weist das Gehäuse zumindest eine matte Oberfläche auf, um aufgrund der diffusen Reflexions- und/oder Streueigenschaften der matten Oberfläche störende Lichtreflexe, beispielsweise durch die vorstehend genannten Ursachen, zu vermeiden.

Die erfindungsgemäße Vorrichtung kann zweckmäßigerweise wenigstens zwei, insbesondere wenigstens drei, Kameras, z.B. in Form von Videokameras, umfassen. In besonders vorteilhafter Ausgestaltung können 13 Kameras vorgesehen sein, welche beispielsweise an einem gemeinsamen Kameramodul angeordnet sind. Vorzugsweise ist die wenigstens eine oder sind insbesondere alle Kameras zur Ausgabe von dreidimensionalen Punktewolken als Bilddaten im Sinne der Erfindung ausgestaltet.

Die wenigstens drei Kameras können vorteilhafterweise in einer gemeinsamen Ebene angeordnet sein, wie beispielsweise entlang zweier sich, insbesondere rechtwinklig, schneidender und/oder paralleler Geraden. Die Anordnung der wenigstens drei Kameras kann dabei achsen- und/oder punktsymmetrisch sein. Im Falle eines vorteilhaften Einsatzes von mehr als drei Kameras hat sich insbesondere eine etwa kreuzförmige Anordnung der Kameras entlang zweier im Wesentlichen senkrechter Geraden in einer gemeinsamen Ebene bewährt, bei welcher eine zentrale Kamera im Schnittpunkt der beiden Geraden angeordnet ist, während jeweils eine Kamera (im Falle von insgesamt 5 Kameras), jeweils zwei Kameras (im Falle von insgesamt 9 Kameras), jeweils 3 Kameras (im Falle von insgesamt 13 Kameras), jeweils 4 Kameras (im Falle von insgesamt 17 Kameras) etc. entlang der jeweiligen Geraden zu beiden Seiten der zentralen Kamera angeordnet sind.

Die wenigstens eine Kamera kann an einer Oberseite des Gehäuses, beispielsweise an einer Gehäuseabdeckung, angeordnet und folglich zur Erzeugung von Bilddaten von einer Oberseite der Mehrzahl an nachgiebigen Gebinden ausgestaltet sein. Alternativ oder zusätzlich kann wenigstens eine Kamera an einer - seitlichen - Gehäusewand angeordnet sein, wobei vorzugsweise an dem Gehäuse wenigstens ein optischer Reflektor, beispielsweise in Form eines Spiegels, angeordnet sein kann. Hierdurch ist es möglich, trotz einer seitlichen Anordnung der Kamera an der Gehäusewand Bilddaten von der Oberseite der Mehrzahl an Gebinden zu erzeugen, beispielsweise indem der Reflektor an der Oberseite des Gehäuses angeordnet ist. Durch den Einsatz solcher Reflektoren kann zudem der optische Weg zwischen der bzw. den Kamera(s) und der zu erfassenden Mehrzahl an Gebinden vergrößert werden, was einen größeren Bilderfassungsbereich der Kamera ermöglicht. Ferner kann durch den Einsatz von Reflektoren die Tiefenschärfe der Kamera(s) verbessert werden. Vorzugsweise sind die Reflektoren überdies zur Korrektur von optischen Verzerrungseffekten ausgebildet.

Alternativ oder zusätzlich kann wenigstens eine Kamera auch an einer Greifeinrichtung des programmtechnisch eingerichteten Manipulators angeordnet sein, wobei die Greifeinrichtung translatorisch und/oder rotatorisch beweglich ist. Hierdurch lassen sich Brennweitenprobleme vermeiden und lässt sich der im Rahmen der erfindungsgemäßen Erzeugung der Bilddaten erfasste Bildbereich der Kamera dynamisch an die Mehrzahl an Gebinden anpassen.

Der Manipulator kann zweckmäßigerweise von einem Roboter, insbesondere von einem mehrachsigen, vorzugsweise sechsachsigen, Industrieroboter gebildet sein, um eine große Bewegungsfreiheit bei zugleich geringer Bauhöhe zu erreichen. Derartige sechsachsige Industrieroboter sind üblicherweise entlang dreier, wechselseitig senkrecht zueinander angeordneter Achsen translatorisch sowie um drei, ebenfalls wechselseitig senkrecht zueinander angeordneter Achsen rotatorisch beweglich.

Wie bereits angedeutet, kann die erfindungsgemäße Vorrichtung ferner eine Entleereinrichtung umfassen, welche insbesondere mit einer Schneideinrichtung zur Öffnung der entnommenen Gebinde ausgestattet ist, um das jeweilige Gebinde nach seiner Entnahme, vorzugsweise in einer vordefinierten Ausrichtung relativ zu der Schneideinrichtung, zu öffnen, so dass eine restmengenminimierte Öffnung des entnommenen Gebindes gewährleistet ist.

Die Steuereinrichtung kann als Rechner ausgebildet sein, welcher zweckmäßigerweise mit den Funktionskomponenten der erfindungsgemäßen Vorrichtung verbunden ist.

Weitere Vorteile und Merkmale der Erfindung ergeben sich aus den Ansprüchen und der nachfolgenden Beschreibung, in der ein Ausführungsbeispiel der Erfindung unter Bezugnahme auf die Zeichnungen im Einzelnen erläutert ist. Dabei zeigen:
- Fig. 1: eine schematische Seitenansicht einer Ausführungsform eine erfindungsgemäße Vorrichtung zum Entnehmen von nachgiebigen Gebinden aus einer Mehrzahl an Gebinden;
- Fig. 2: eine schematische Schnittansicht einer Ausführungsform eines Gehäuses zur Aufnahme einer Mehrzahl an Gebinden der Vorrichtung gemäß Fig. 1;
- Fig. 3: eine schematische Draufsicht auf eine Ausführungsform eines Kameramoduls mit einer Mehrzahl an Kameras der Vorrichtung gemäß Fig.;
- Fig. 4: eine im Wesentlichen der Fig. 2 entsprechende schematische Schnittansicht des Gehäuses der Vorrichtung gemäß Fig. 1 mit einer Steuereinheit;
- Fig. 5-8: je eine schematische Draufsicht auf eine Mehrzahl an Gebinden in Form von Sackstapeln mit verschiedener Stapelanordnung;
- Fig. 9: ein schematisches Ablaufdiagramm zur Veranschaulichung einer Ausführungsform eines erfindungsgemäßen Verfahrens zum Entnehmen von nachgiebigen Gebinden aus einer Mehrzahl an Gebinden;
- Fig. 10: eine im Wesentlichen der Fig. 5 entsprechende schematische Draufsicht auf eine Mehrzahl an Gebinden in Form eines Sackstapels mit in Bezug auf das in Fig. 10 linke Gebinde schematisch dargestellten Positionsinformationen;
- Fig. 11: eine im Wesentlichen der Fig. 10 entsprechende schematische Draufsicht auf die Mehrzahl an Gebinden in Form eines Sackstapels, bei welcher das in Fig. 11 linke Gebinde verschoben worden ist;
- Fig. 12: ein schematisches Ablaufdiagramm zur Veranschaulichung einer Ausführungsform eines Lernmodus des erfindungsgemäßen Verfahrens zum Entnehmen von nachgiebigen Gebinden aus einer Mehrzahl an Gebinden;
- Fig. 13: eine schematische Ansicht eines Displays der Vorrichtung zur Veranschaulichung der Anzeige einer eingelesenen Positionsinformation eines nachgiebigen Gebindes der Mehrzahl an Gebinden;
- Fig. 14: ein schematisches Ablaufdiagramm zur Veranschaulichung eines Trainingsmodus des erfindungsgemäßen Verfahrens zum Entnehmen von nachgiebigen Gebinden aus einer Mehrzahl an Gebinden;
- Fig. 15: eine schematische Seitenansicht einer weiteren Ausführungsform eines Gehäuses zur Aufnahme einer Mehrzahl an Gebinden der Vorrichtung gemäß Fig. 1; und
- Fig. 16: eine schematische perspektivische Ansicht eines in Form eines Industrieroboters ausgestalteten Manipulators mit einem Kameramodul der Vorrichtung gemäß Fig. 1.

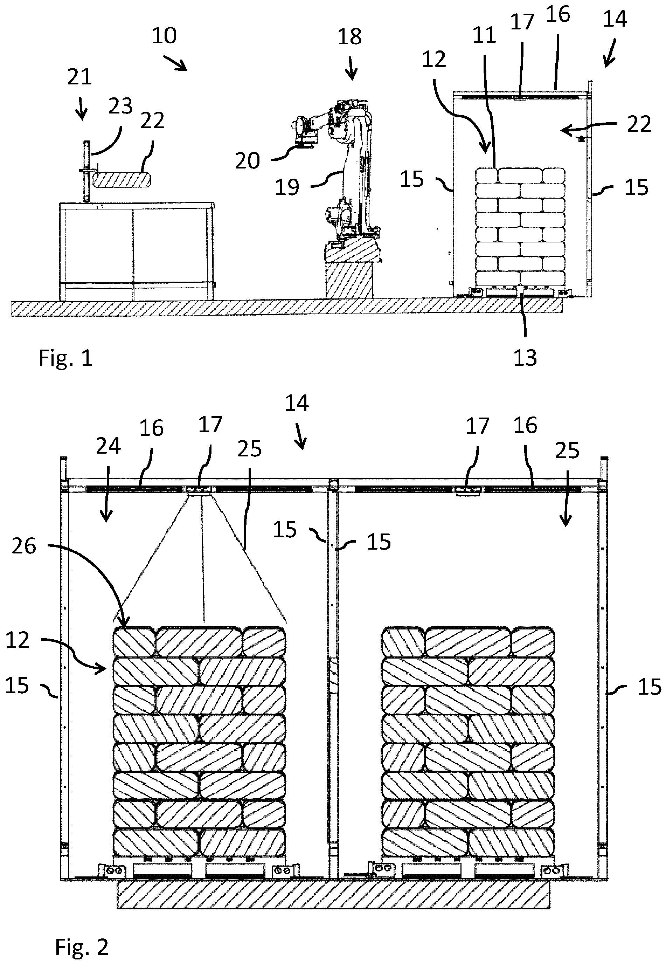

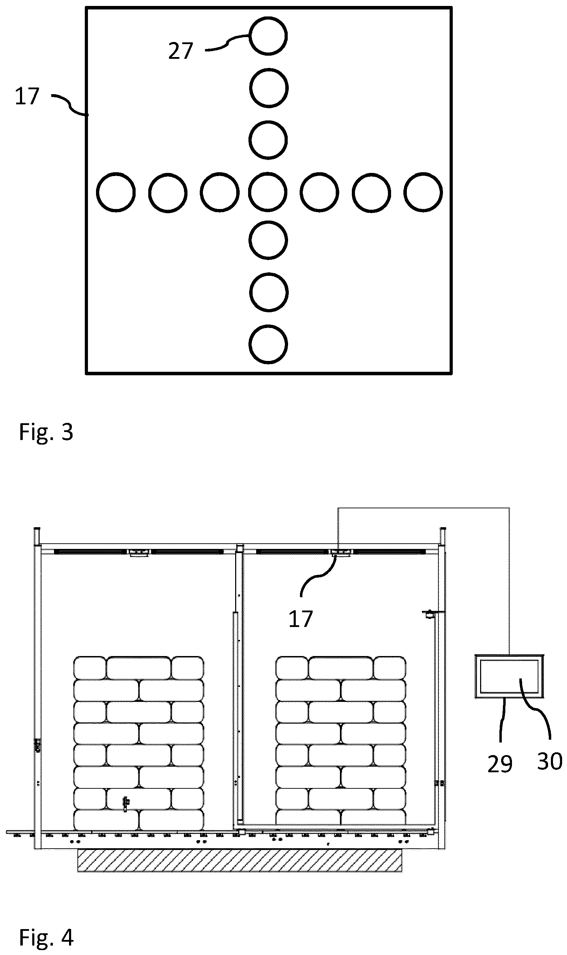

In der Fig. 1 ist eine Ausführungsform einer erfindungsgemäßen Vorrichtung 10 zum Entnehmen je eines nachgiebigen Gebindes 11 aus einer Mehrzahl an nachgiebigen Gebinden 11 in einer schematischen Seitenansicht schematisch wiedergegeben, wobei die Gebinde 11 im vorliegenden Fall in Form von Säcken ausgestaltet sind, welche beispielsweise zur Aufnahme von pulver- oder partikelförmigen Granulaten dienen, wie z.B. solchen der weiter oben genannten Art. Die von Säcken gebildeten Gebinde 11 liegen in Form eines in der Fig. 1 rechts erkennbaren Sackstapels 12 vor und können mit unterschiedlichen Füllgraden mit den Granulaten befüllt sein. Der Sackstapel 12 kann auf einer Palette 13 angeordnet sein, auf welcher er der Vorrichtung 10 beispielsweise mittels eines nicht gezeigten Gabelstaplers zugeführt worden ist. Der Sackstapel 12 ist in einem Gehäuse 14 der Vorrichtung 10 aufgenommen, von welchem in der Fig. 1 zwei (seitliche) Gehäusewände 15 und eine Oberseite 16 dargestellt sind, wobei an der Oberseite 16 des Gehäuses 14 ein weiter unten unter Bezugnahme auf die Fig. 3 näher erläutertes Kameramodul 17 mit einer nicht zeichnerisch dargestellten Beleuchtungseinrichtung angeordnet sind. Sämtliche dem Sackstapel 12 zugewandten Oberflächen des Gehäuses 14 sind vorzugsweise matt ausgestaltet, wie z.B. infolge einer entsprechenden Oberflächenbeschichtung oder -lackierung der Innenseite des Gehäuses 14, um störende Lichtreflexionen aufgrund von Lichtquellen in der Umgebung der Vorrichtung 10 zu vermeiden.

Wie des Weiteren aus der Fig. 1 hervorgeht, umfasst die Vorrichtung 10 ferner einen Manipulator 18, in dessen Arbeitsbereich das Gehäuse 14 mit den Sackstapeln 12 angeordnet ist und welcher beim vorliegenden Ausführungsbeispiel als sechsachsiger Industrieroboter 19 ausgestaltet ist und eine an einer Roboterhand angeordnete Greifeinrichtung 20, z.B. in Form eines mechanischen Greifers, eines Sauggreifers oder dergleichen, besitzt, um einzelne Gebinde 11 bzw. Säcke dem Sackstapel 12 zu entnehmen und einer sich gleichfalls im Arbeitsbereich des Industrieroboters 19 angeordneten Entleereinrichtung 21 zuzuführen. Die Entleereinrichtung 21 weist zum Öffnen eines jeweiligen entnommenen Gebindes 11 bzw. Sackes eine mit einem Messer 22 versehene Schneideinrichtung 23 auf. Nach dem Öffnen des Sackes 11 kann das hierin aufgenommene Granulat in als solcher bekannter Weise der Entleereinrichtung 21 zur weiteren Bearbeitung zugeführt werden, während der entleerte Sack 11 entsorgt werden kann.

In der Fig. 2 ist eine Detailansicht einer Ausführungsform des Gehäuses 14 der Vorrichtung gemäß Fig. 1 mit zwei Kammern 24, 25 schematisch wiedergegeben, welche beide z.B. identisch ausgestaltet sind, so dass im Folgenden lediglich auf die in der Fig. 2 linke Kammer 24 eingegangen werden muss. Die Kammer 24 weist hierbei (ebenso wie die Kammer 25) die Gehäusewände 15 und die Oberseite 16 sowie das Kameramodul 17 auf, welches derart in Richtung der Innenseite der Kammer 24 - also zu dem hierin befindlichen Sackstapel 12 hin - ausgerichtet ist, dass der Sackstapel 12, insbesondere dessen Oberseite 26, jeweils vollständig von den Erfassungswinkeln 25 sämtlicher Kameras 27 des Kameramoduls 17 erfasst ist. Das Gehäuse 14 weist ferner mehrere, nicht dargestellte Beleuchtungseinrichtungen auf, um die Oberseite 26 des Sackstapels 12 möglichst gleichmäßig zu beleuchten.

Die Fig. 3 zeigt eine exemplarische Ausführungsform des Kameramoduls 17 der Fig. 2 in einer schematischen Draufsicht, wobei das Kameramodul 17 im vorliegenden Fall z.B. dreizehn Kameras 27 aufweist, welche im Wesentlichen kreuzförmig entlang zweier etwa senkrechter Geraden in einer gemeinsamen Ebene angeordnet sind, wobei eine zentrale Kamera 27 im Schnittpunkt der beiden Geraden angeordnet ist, während jeweils drei weitere Kameras 27 entlang einer jeweiligen der Geraden zu beiden Seiten der zentralen Kamera 27 angeordnet sind. Alle Kameras 27 des Kameramoduls 17 sind mit einer in der Fig. 3 nicht gezeigten Recheneinheit des Kameramoduls 17 verbunden, wobei die Recheneinheit beispielsweise eingerichtet ist, um aus den aufgenommenen Bildern der Kameras 27 eine dreidimensionale Punktewolke zu erzeugen, welche der den Kameras 27 zugewandten Oberseite 26 des Sackstapels 12 entspricht und insoweit deren dreidimensionalen Topographie entspricht. Neben den aufgenommenen Bildern der Kameras 27 wird die Punktewolke z.B. in Form von Bilddaten b_{d} an eine Steuereinheit 29 (vgl. die Fig. 4) übermittelt, welche als Recheneinheit mit einem Computerprogramm mit Programmcodemitteln ausgestattet ist, wobei das Computerprogramm zur Durchführung des weiter unten im Einzelnen beschriebenen Verfahrens zum Entnehmen der nachgiebigen Gebinde 11 bzw. Säcke von den Sackstapeln 12 eingerichtet ist, wenn das Computerprogramm ausgeführt wird. Die Steuereinheit 29 weist im vorliegenden Fall ferner ein Display 30 mit einem Touchscreen auf, um insbesondere während eines weiter unten näher beschriebenen Lernmodus des Verfahrens Benutzereingaben einlesen zu können.

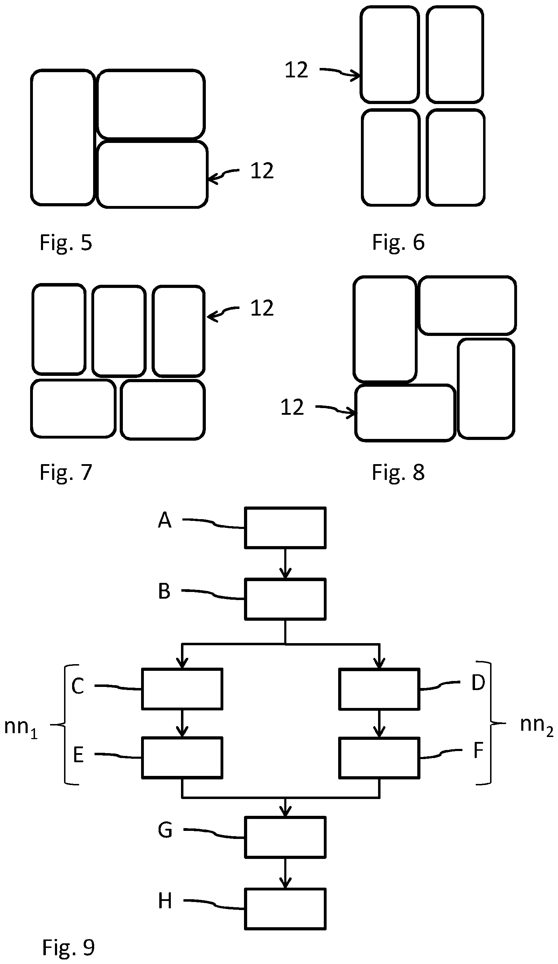

Wie den Fig. 5 bis 8 exemplarisch zu entnehmen ist, können die Sackstapel 12 in verschiedenen Relativanordnungen in Form von Draufsichten von den Kameras 27 des Kameramoduls 17 erfasst werden. Für jeden der gezeigten Sackstapel 12 vermag das Verfahren zum Entnehmen einzelner Gebinde 11 bzw. Säcke Positionsinformationen pᵢ des jeweils zu entnehmenden Gebindes 11 bzw. Sackes zu bestimmen, um das jeweilige Gebinde 11 bzw. den jeweiligen Sack 11 mittels des Manipulators 18 demgemäß dem Sackstapel 12 zu entnehmen.

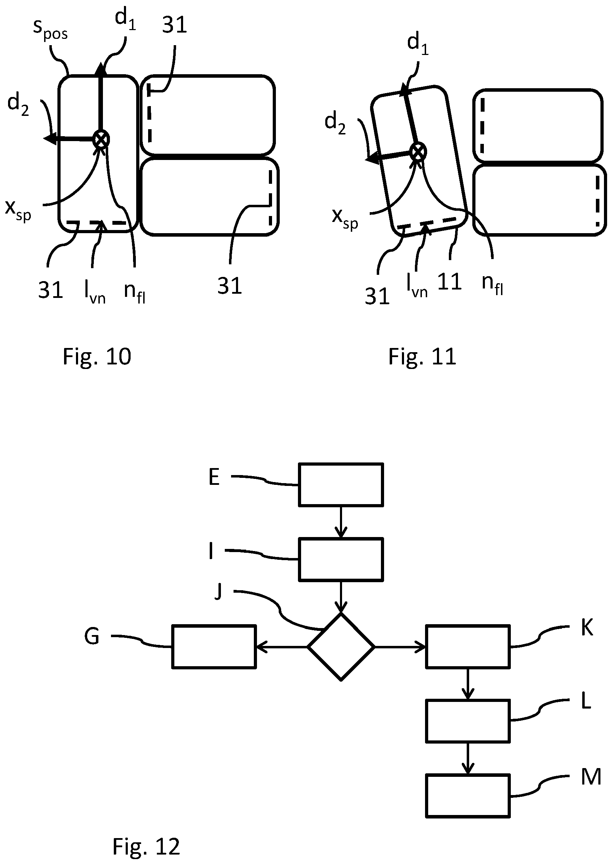

Eine Ausführungsform eines erfindungsgemäßen Verfahrens zum Entnehmen eines jeweiligen nachgiebigen Gebindes 11 bzw. Sackes aus dem Sackstapel 12 ist in der Fig. 9 anhand eines schematischen Ablaufdiagramms veranschaulicht. Nachdem der auf der Palette 13 angeordnete Sackstapel 12 im Innern des Gehäuses 14 der Vorrichtung 10 bereitgestellt worden ist (Verfahrensschritt A; vgl. auch die obige Fig. 1), erfassen die Kameras 27 des Kameramoduls 14 die Oberseite 26 des Sackstapels 12 und erzeugen auf der Grundlage der aufgenommenen Bilder die dreidimensionale Punktewolke der den Kameras 27 zugewandten Oberseite 26 des Sackstapels 12 (Verfahrensschritt B). Die so erzeugten Bilddaten b_{d} werden daraufhin an die Steuereinheit 29 übermittelt, welche im Falle des Ausführungsbeispiels der Fig. 9 zwei trainierte neuronale Netzwerke nn₁, nn₂ umfasst, wobei beide trainierte neuronale Netzwerke nn₁, nn₂ jeweils auf die Bilddaten b_{d} angewendet werden (Verfahrensschritte C, D). Das erste trainierte neuronale Netzwerk nn₁ bestimmt aus den Bilddaten b_{d} die dreidimensionale Lage des jeweils zu entnehmenden Gebindes 11 bzw. Sackes 11, welche z.B. dessen dreidimensionale Position sₚₒₛ, dessen Rotationszustand in Bezug auf die Achsen eines Koordinatensystems sowie dessen Schwerpunkt xₛₚ und dessen Flächennormale n_{fl} im Bereich des Schwerpunktes xₛₚ umfasst, wobei die vorstehend genannten Informationen als erste Positionsinformation pᵢ bestimmt werden (Verfahrensschritt E). Durch die Anwendung des zweiten neuronalen Netzwerks nn₂ auf die Bilddaten b_{d} werden die Lagen lᵥₙ und Orientierungen von Verschlussnähten 31 der Säcke 11 als zweite Positionsinformation pᵢ bestimmt (Verfahrensschritt F). Eine Auswahl der vorstehend genannten Informationen ist in der Fig. 10 dargestellt. Beide trainierten neuronalen Netzwerke nn₁, nn₂ bestimmen die ihnen jeweils zugeordneten Positionsinformationen pᵢ getrennt voneinander und parallel zueinander.

Auf der Grundlage der ersten Positionsinformation pᵢ, welche insbesondere den Schwerpunkt xₛₚ des Gebindes 11 bzw. Sackes und dessen dortige Flächennormale n_{fl} umfassen, wird eine Weginformation für den - hier als Industrieroboter 19 ausgestalteten - Manipulator 18 bestimmt und an diesen übermittelt (Verfahrensschritt G). Die Weginformation veranlasst den Industrieroboters 19 daraufhin, mit seiner an der Roboterhand angeordneten Greifeinrichtung 20 den Schwerpunkt xₛₚ des zu entnehmenden Gebindes 11 bzw. Sackes anzusteuern und sich diesem in Richtung der Flächennormalen n_{fl} des Schwerpunktes xₛₚ zu nähern, um das Gebinde 11 bzw. den Sack an oder symmetrisch zu seinem Schwerpunkt xₛₚ zu ergreifen und dem Sackstapel 12 zu entnehmen (Verfahrensschritt H).

Neben der ersten Positionsinformation pᵢ wird auf der Grundlage der zweiten Positionsinformation pᵢ des zu entnehmenden Sackes 11 eine zweite Weginformation bestimmt, welche ebenfalls dem - hier in Form eines Industrieroboters 19 ausgestalteten - Manipulator 18 zugeführt wird. Aufgrund der jeweiligen Lage lᵥₙ der Verschlussnaht 31 sieht die zweite Weginformation für die Greifeinrichtung 20 des Industrieroboters 19 vor, dass das Gebinde 11 bzw. der Sack nach dessen Entnahme mittels des Industrieroboters 19 in eine vordefinierte Lage und Ausrichtung gebracht wird. Auf diese Weise wird sichergestellt, dass das Gebinde 11 bzw. der Sack nach seiner Entnahme derart rotiert und/oder verschwenkt wird, dass dessen Verschlussnaht 31 z.B. etwa vertikal nach oben weist, um ein versehentliches Öffnen des Gebindes 11 bzw. Sackes zu vermeiden. Auf der Grundlage der zweiten Weginformation wird das Gebinde 11 bzw. der Sack durch den Industrieroboter 19 in einer vordefinierten Übergabeposition derart der Entleereinrichtung 21 (vgl. auch die obigen Fig. 1) zugeführt, dass die Verschlussnaht 31 des Gebindes 11 bzw. Sackes in unmittelbarer Nähe des Messers 22 der Schneideinrichtung 23 angeordnet ist, um den das Gebinde 11 bzw. den Sack 11 besonders zeitsparend und restmengenoptimiert zu öffnen. Anschließend wird das entleerte Gebindes 11 bzw. der entleerte Sack entsorgt und dessen Inhalt weiter verarbeitet. Nachdem der Industrieroboter 19 das entnommene Gebinde 11 bzw. den entnommenen Sack der Entleereinrichtung 21 zugeführt hat, wird das vorstehend beschriebene Verfahren wiederholt und das nächste zu entnehmende Gebinde 11 bzw. der nächste Sack bestimmt, so dass sich der Industrieroboter 19 wieder zu dem Sackstapel 12 zurück bewegt und den nächsten Sack dem Sackstapel 12 entnimmt. Diese Schritte werden selbsttätig solange wiederholt, bis sämtliche Gebinde 11 bzw. Säcke des Sackstapels 12 vollständig entnommen worden sind.

Die Fig. 10 zeigt eine Auswahl von bestimmten Positionsinformationen pᵢ des Sackstapels 12 gemäß der Fig. 5, wie dies auf dem Display 30 dargestellt werden kann. Im vorliegenden Beispiel werden die Gebinde 11 bzw. Säcke als angenäherte Rechtecke mit abgerundeten Flächen angezeigt, deren Anordnung im dreidimensionalen Raum durch die Anwendung des ersten trainierten neuronalen Netzwerks nn₁ auf die Bilddaten b_{d} bestimmt worden ist. Exemplarisch ist für das in der Fig. 10 linke Gebinde 11 dessen räumliche Anordnung durch zwei Pfeile d₁, d₂ gekennzeichnet, welche aus Übersichtsgründen an dem, ebenfalls durch das erste trainierte neuronale Netzwerk bestimmten, Schwerpunkt xₛₚ des Gebindes 11 bzw. Sackes ansetzen. Durch die Anwendung des zweiten trainierten neuronalen Netzwerks nn₂ ist für jedes Gebinde 11 bzw. für jeden Sack in der Fig. 10 jeweils die Lage lᵥₙ der Verschlussnaht 31 bestimmt worden, was als gestrichelte Linie gekennzeichnet ist. Hieraus geht z.B. hervor, dass die beiden Gebinde 11 bzw. Säcke auf der rechten Seite des Sackstapels 12 um 180° in Bezug auf eine vertikale Achse senkrecht zur Zeichnungsebene zueinander rotiert angeordnet sind, was bei der Entnahme der Gebinde 11 bzw. Säcke durch eine entsprechende Ansteuerung des Industrieroboters 19 berücksichtigt wird.

In der Fig. 11 ist derselbe Sackstapel 12 der Fig. 10 dargestellt, nachdem das dort linke Gebinde 11 bzw. der linke Sack im Vergleich zur Situation der Fig. 10 um einen endlichen Winkel um die vertikale Achse rotiert sowie etwas nach links von den beiden rechten Gebinden 11 bzw. Säcken fort verlagert worden ist. Diese Abweichung von der Situation gemäß der Fig. 10 ist bei der Bestimmung der ersten Positionsinformation pᵢ durch die Anwendung des ersten trainierten neuronalen Netzwerks nn₁ korrekt festgestellt worden, was durch die in der Fig. 11 dargestellten, der räumlichen Orientierung des dort linken Gebinde 11 bzw. Sackes entsprechenden Pfeile d₁, d₂, welche im Vergleich zu der Fig. 10 verschwenkt und versetzt sind, dem Benutzer auf dem Display 30 dargestellt wird. Daneben wurde die verschwenkte und versetzte Anordnung des in der Fig. 11 linken Gebindes 11 bzw. Sackes auch bei der Bestimmung der zweiten Positionsinformation pᵢ durch die Anwendung des zweiten trainierten neuronalen Netzwerks nn₂ berücksichtigt, da die Lage lᵥₙ der Verschlussnaht 31 verglichen mit der Situation gemäß der Fig. 10 ebenfalls verschwenkt und versetzt dargestellt wird.

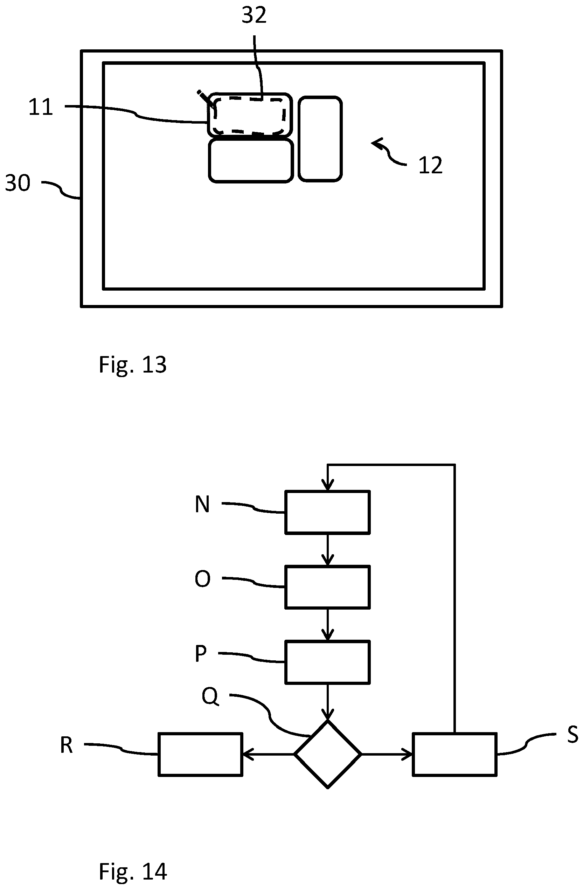

Ein weiterer Aspekt des erfindungsgemäßen Verfahrens zum Entnehmen der nachgiebigen Gebinde 11 aus der Mehrzahl an nachgiebigen Gebinden 11 sieht einen Lernmodus vor, welcher eine Anpassung der verwendeten trainierten neuronalen Netzwerke nn₁, nn₂ während des regulären Betriebes ermöglicht und im Ablaufdiagramm der Fig. 12 schematisch veranschaulicht ist, wobei der Ablauf aus Übersichtsgründen lediglich für ein einziges neuronales Netzwerk nn₁ skizziert ist:
Nachdem im Rahmen des bereits vorstehend beschriebenen Verfahrens gemäß der Fig. 9 die Positionsinformation pᵢ durch die Anwendung des trainierten neuronalen Netzwerks nn₁ auf die Bilddaten b_{d} bestimmt wurde (Verfahrensschritt E), wird nun ein Fehlerparameter fₚ berechnet, welcher der Erkennungsgenauigkeit der bestimmten Positionsinformation pᵢ entspricht (Verfahrensschritt I). Der Fehlerparameter fₚ wird anschließend mit einem vordefinierten Grenzwert g_{w} verglichen (Verfahrensschritt J). Für den Fall, dass der Fehlerparameter fₚ kleiner ist als der Grenzwert g_{w}, wird das Verfahren gemäß der Fig. 9 mit der Übermittlung der Positionsinformation pᵢ wie bereits beschrieben fortgesetzt (Verfahrensschritt G). Für den Fall, dass der Fehlerparameter fₚ größer ist als der Grenzwert g_{w}, wird das Verfahren in den Lernmodus umgeschaltet, in welchem eine Positionsinformation pᵢ' des zu entnehmenden Sackes 11 eingelesen wird (Verfahrensschritt K). Hierzu werden die erzeugten Bilddaten b_{d} dem Benutzer auf dem Display 30 angezeigt, woraufhin der Benutzer die Kontur des Gebindes 11 bzw. Sackes per Benutzereingabe auf dem Touchscreen des Displays 30 nachzeichnet bzw. umgrenzt, was auch als "Tagging", oder "Labelling" bezeichnet wird. Ähnliche Benutzereingaben für andere einzulesende Positionsinformationen pᵢ' sind ebenfalls möglich, beispielsweise die Nachzeichnung der Verschlussnaht, der Oberseite und/oder der Unterseite des Gebindes 11 mittels einer vom Benutzer eingegebenen Linie. Die Fig. 13 gibt die Anzeige des Displays 30 im Lernmodus des erfindungsgemäßen Verfahrens mit einem Sackstapel 12 schematisch wieder, wobei das dort linke oben befindliche Gebinde 11 bzw. der linke obere Sack entnommen werden soll. Dessen Positionsdaten pᵢ sind im vorliegenden Fall durch die Anwendung des trainierten neuronalen Netzwerks nn₁ nicht hinreichend sicher bestimmt worden, so dass der Benutzer die Kontur 32 des Sackes 11 durch Eingabe eines den Sack 11 approximierenden Rechtecks als Positionsinformation pᵢ' einzugeben vermag bzw. "taggt", wobei die Benutzereingabe der Umfangskontur 32 des Gebindes 11 bzw. Sackes in der Fig. 13 als gestricheltes Rechteck dargestellt ist.

Auf der Grundlage der hier durch die Benutzereingabe eingelesenen Positionsinformation pᵢ' sowie der (zu) unsicher bestimmten Positionsinformation pᵢ wird gemäß dem in der Fig. 12 gezeigten Ablaufdiagramm ein Differenzparameter dₚ bestimmt, welcher ein Maß für die Abweichung der bestimmten Positionsinformation pᵢ' von der eingelesenen Positionsinformation pᵢ darstellt. Das neuronale Netzwerk nn₁ wird mit dem Differenzparameter dₚ nun rückwärts gespeist, so dass dessen Parameter derart geändert werden, so dass künftig gleichartige und/oder ähnliche Oberseiten 26 von Sackstapeln 12 zuverlässiger erkannt werden (Verfahrensschritt L). Durch den Lernmodus ist es somit möglich, das trainierte neuronale Netzwerk nn₁ während seiner konkreten Anwendung auf neuartige Sackstapel 12 anzupassen. Nach dem Rückwärtsspeisen des neuronalen Netzwerks nn₁ oder parallel hierzu wird unter Verwendung der eingelesenen Positionsinformation pᵢ' das zu entnehmende Gebinde 11 bzw. der zu entnehmende Sack wie bereits weiter oben unter Bezugnahme auf die Fig. 9 beschrieben entnommen (dortiger Verfahrensschritt M).

Um das wenigstens eine neuronale Netzwerk nn₁, nn₂ auf den konkreten Anwendungszweck vorzubereiten, wird es zuvor diesbezüglich trainiert, wobei eine mögliche Ausgestaltung des Trainingsverfahrens in dem Ablaufschema der Fig. 14 veranschaulicht ist. Wie dort ersichtlich, werden zunächst Soll-Trainingsdaten tr_{d} bereitgestellt (Verfahrensschritt N), welche Bilddaten b_{d} von wenigstens einem Gebinde 11 bzw. Sack eines Sackstapels 12 und hiermit jeweils korrespondiere, vordefinierte Positionsinformationen p_{d} des jeweils zu entnehmenden Gebindes 11 bzw. Sackes umfassen. Die vordefinierte Positionsinformation p_{d} entspricht im Sinne der Erfindung dem idealen Ergebnis, welches durch die Anwendung eines optimal trainierten neuronalen Netzwerks nn₁ auf die Bilddaten b_{d} erhalten werden kann. Die vordefinierte Positionsinformation p_{d} wird im Ausführungsbeispiel durch eine Benutzereingabe bestimmt, wie dies bereits vorstehend in Zusammenhang mit dem "Tagging" bzw. "Labelling" beschrieben ist. Der Benutzer zeichnet beispielsweise die Kontur eines in den Bilddaten b_{d} gezeigten Sackes 12 nach, wobei jeder Sack, aufgrund seiner nachgiebigen Beschaffenheit, je nach vorliegender Anordnung und/oder Füllungsgrad eine andere Geometrie aufweisen kann. Diese unterschiedlichen Geometrien werden im Zuge des Trainings dadurch berücksichtigt, dass die zu den Bilddaten b_{d} zugeordneten Positionsinformationen p_{d} durch eine Benutzereingabe bestimmt werden. Der User kann, neben der bereits erwähnten Approximation des Sackes 12 durch ein Rechteck, auch die Verschlussnaht des Sackes 12 durch eine gestrichelte Linie markieren, deren Position, Länge und Ausrichtung als Positionsinformation p_{d} des zu entnehmenden Sackes 12 für das Training des neuronalen Netzwerks bestimmt wird.

In einem nächsten Verfahrensschritt O wird das neuronale Netzwerk nn₁ auf die Bilddaten b_{d} angewendet, mithin mit diesen vorwärtsgespeist, um eine ermittelte Positionsinformation pᵢ des zu entnehmenden Gebindes 11 bzw. Sackes zu erhalten. Anschließend wird ein Fehlervektor fᵥ auf der Grundlage der durch das Vorwärtsspeisen erhaltenen Positionsinformation pᵢ und der vordefinierten Positionsinformation pᵢ der Soll-Trainingsdaten tr_{d} ermittelt. Der Fehlervektor fᵥ entspricht insoweit einer Abweichung des durch das neuronale Netzwerk nn₁ mit seinem aktuellen Parametersatz erhaltenen Ergebnisses von dem idealen Ergebnis der Soll-Trainingsdaten tr_{d}.

Nach der Bestimmung des Fehlervektors fᵥ wird auf dessen Grundlage ein Qualitätsparameter qₚ bestimmt (Verfahrensschritt P), welcher mit einem vordefinierten Wert w_{q} mittels einer Abfrage verglichen wird (Verfahrensschritt Q). Der Wert des Qualitätsparameters qₚ entspricht insoweit der Erkennungsgenauigkeit des neuronalen Netzwerks nn₁ in seinem aktuell konfigurierten Zustand, wobei der vordefinierte Wert w_{q} einer gewünschten Erkennungsgenauigkeit des neuronalen Netzwerks nn₁ entspricht. Ergibt der Vergleich, dass der Qualitätsparameter qₚ größer als der vordefinierte Wert w_{q} ist, ist das neuronale Netzwerk nn₁ hinreichend gut trainiert und kann für den konkreten Anwendungszweck verwendet werden. Der Trainingsmodus wird dann beendet (Verfahrensschritt R) .

Falls der Qualitätsparameter qₚ den vordefinierten Wert w_{q} hingegen unterschreitet, wird das neuronale Netzwerk nn₁ mit dem Fehlervektor fᵥ rückwärtsgespeist, wodurch die Parameter des neuronalen Netzwerks nn₁ geändert werden, so dass künftig Positionsinformationen pᵢ von Sackstapeln 12, welche den Bilddaten b_{d} der Soll-Trainingsdaten tr_{d} entsprechen, durch die Anwendung des neuronalen Netzwerks nn₁ zuverlässiger erkannt werden (Verfahrensschritt S). Nach dem Rückwärtsspeisen wird das Trainingsverfahren so lange mit anderen Soll-Trainingsdaten tr_{d} gemäß dem Verfahrensschritt N wiederholt, bis der Qualitätsparameter qₚ den vordefinierten Wert w_{q} überschreitet, woraufhin das Trainingsverfahren beendet wird.

Die Fig. 14 zeigt eine weitere Ausführungsform eines Gehäuses 14 der Vorrichtung gemäß der Fig. 1, wobei das Kameramodul 17 im Unterschied zu dem Gehäuse 14 der Fig. 1 und 2 an der seitlichen - hier rechten - Gehäusewand 15 des Gehäuses 14 etwa auf der Höhe der Oberseite 26 des Sackstapels 12 angeordnet ist, von welchem noch keine Gebinde 11 bzw. Säcke entnommen worden sind. Das Kameramodul 17 weist nicht direkt in Richtung des Sackstapels 12, sondern ist derart in Bezug auf einen optischen Reflektor 33, z.B. in Form eines Spiegels, an der Oberseite 16 des Gehäuses 14 ausgerichtet, dass die Oberseite 26 des Sackstapels 12 von den Kameras 27 des Kameramoduls 17 nach Reflexion an dem Reflektor 33 erfasst wird. Verglichen mit einer direkten Ausrichtung des Kameramoduls 17 auf die Oberseite 26 des Sackstapels 12 (vgl. hierzu die Fig. 2) wird in der Ausgestaltung der Fig. 14 der optische Weg, welchen das von der Oberseite 26 des Sackstapels 12 reflektierte Licht bis zu den Kameras 27 des Kameramoduls 17 zurücklegen muss, verlängert. Der in Form des Spiegels ausgestaltete Reflektor 33 ist zweckmäßigerweise ferner derart ausgestaltet, dass optische Fehler, wie etwa optische Verzerrungen, korrigiert werden, um eine möglichst korrekte Abbildung des Sackstapels 12 zu erhalten.

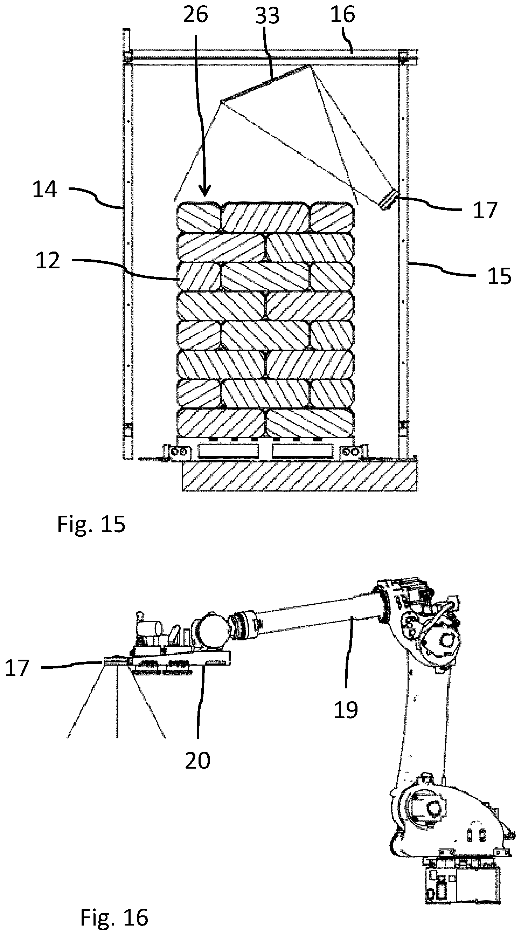

Wie schließlich aus der Fig. 16 hervorgeht, kann das Kameramodul 17 gemäß einer weiteren Ausgestaltung der erfindungsgemäßen Vorrichtung 10 auch an der die Greifeinrichtung 20 tragenden Roboterhand des Industrieroboters 19 angeordnet und insoweit, wie vorstehend beschrieben, gemeinsam mit dieser um sechs Achsen beweglich sein. Dies ermöglicht eine dynamische Anpassung der Ausrichtung des Kameramoduls 17, um eine ideale Position für das Erzeugen der Bilddaten b_{d} zu ermitteln und einzunehmen. Darüber hinaus kann die Bewegung der Greifeinrichtung 20 mittels des Roboters 19 anhand der Bilddaten b_{d} des Kameramoduls 17 während des Betriebs überprüft und gegebenenfalls korrigiert werden.

## Patentansprüche

1. Verfahren zum Entnehmen eines nachgiebigen Gebindes (11) aus einer Mehrzahl (12) an Gebinden (11), umfassend die folgenden Schritte:
- Bereitstellen (A) der Mehrzahl (12) an Gebinden (11),
- Erzeugen (B) von Bilddaten (b_{d}) von wenigstens einem Gebinde (11) der Mehrzahl (12) an Gebinden (11),
- Bestimmen (E, F) von wenigstens einer Positionsinformation (pᵢ) des zu entnehmenden Gebindes (11),
- Übermitteln (G) der Positionsinformation (pᵢ) des zu entnehmenden Gebindes (11) an einen programmtechnisch eingerichteten Manipulator (19), und
- Entnehmen (H) des Gebindes (11) mittels des Manipulators (19),
**dadurch gekennzeichnet, dass** das Bestimmen (E, F) der Positionsinformation (pᵢ) des zu entnehmenden Gebindes (11) durch die Anwendung (C, D) von wenigstens einem trainierten neuronalen Netzwerk (nn₁, nn₂) auf die Bilddaten (b_{d}) der Mehrzahl (12) an Gebinden (11) erfolgt.

2. Verfahren nach Anspruch 1, **dadurch gekennzeichnet, dass** die Bilddaten (b_{d}) von wenigstens einem Gebinde (11) der Mehrzahl (12) an Gebinden (11)
- wenigstens eine zweidimensionale Bildinformation des Gebindes (11), insbesondere wenigstens ein Kamerabild des Gebindes (11); und/oder
- wenigstens eine dreidimensionale Bildinformation des Gebindes (11), insbesondere eine dreidimensionale Punktewolke,
umfassen.

3. Verfahren nach Anspruch 1 oder 2, **dadurch gekennzeichnet, dass** die Bilddaten (b_{d}) von wenigstens einem Gebinde (11) der Mehrzahl (12) an Gebinden (11) und/oder die Positionsinformation (pᵢ) des zu entnehmenden Gebindes (11) auf einer Ausgabeeinrichtung (30), insbesondere auf einem Display (30), ausgegeben werden.

4. Verfahren nach einem der Ansprüche 1 bis 3, **dadurch gekennzeichnet, dass** die Positionsinformation (pᵢ) des zu entnehmenden Gebindes (11) wenigstens eine Information aus der folgenden Gruppe enthält:
Raumposition (spos), Lage, Position des Schwerpunktes (xₛₚ), Ausdehnung, Geometrie (32), vorzugsweise zweidimensionale Projektion des Gebindes (11), Rotationszustand des Gebindes (11) in Bezug auf wenigstens eine vordefinierte Referenzachse, Flächennormale (n_{fl}) des Gebindes (11), Position und/oder Lage einer vordefinierten Seite des Gebindes (11), insbesondere einer Boden- und/oder Ober- und/oder Befüllseite des Gebindes (11), Lage (lᵥₙ) und Verlauf einer Verschlussnaht (31), Überlappung des Gebindes (11) mit einem anderen Gebinde (11), Dicke, Füllgrad des Gebindes (11).

5. Verfahren nach einem der Ansprüche 1 bis 4, **dadurch gekennzeichnet, dass** wenigstens zwei trainierte neuronale Netzwerke (nn₁, nn₂) ausgebildet sind, wobei eine erste Positionsinformation (pᵢ) durch die Anwendung (C) von einem ersten trainierten neuronalen Netzwerk (nn₁) auf die Bilddaten (b_{d}) der Mehrzahl (12) an Gebinden (11) und eine zweite Positionsinformation (pᵢ) durch die Anwendung (D) von einem zweiten neuronalen Netzwerk (nn₂) auf die Bilddaten (b_{d}) der Mehrzahl (12) an Gebinden (11) bestimmt werden.

6. Verfahren nach einem der Ansprüche 1 bis 5, **dadurch gekennzeichnet, dass** auf der Grundlage der Positionsinformation (pᵢ) des zu entnehmenden Gebindes (11) eine Weginformation des Manipulators (19) bestimmt wird, um das Gebinde (11) zu entnehmen, wobei das entnommene Gebinde (11) insbesondere mittels des Manipulators (19) auf der Grundlage der Weginformation in eine vordefinierte Lage, insbesondere in eine vordefinierte Rotationslage, gebracht wird.

7. Verfahren nach einem der Ansprüche 1 bis 6, **dadurch gekennzeichnet, dass**
- das entnommene Gebinde (11) einer Entleereinrichtung (22) zugeführt wird, insbesondere in einer vordefinierten Übergabeposition, und/oder
- das Verfahren nach dem Entnehmen (H) des Gebindes (11) selbsttätig wiederholt wird, um sämtliche Gebinde (11) der Mehrzahl (12) an Gebinden (11) zu entnehmen.

8. Verfahren nach einem der Ansprüche 1 bis 7, **dadurch gekennzeichnet, dass** nach der Anwendung (C, D) des wenigstens einen trainierten neuronalen Netzwerks (nn₁, nn₂) auf die Bilddaten (b_{d}) der Mehrzahl (12) an Gebinden (11) und der Bestimmung (E, F) der Positionsinformation (pᵢ) ein Fehlerparameter (fₚ) bestimmt wird (I), welcher der Erkennungsgenauigkeit der bestimmten Positionsinformation (pᵢ) entspricht, wobei der Fehlerparameter (fₚ) insbesondere nach seiner Bestimmung mit einem vordefinierten Grenzwert (g_{w}) verglichen wird (J) und für den Fall, dass der Fehlerparameter (fₚ) kleiner ist als der Grenzwert (g_{w}), das Verfahren fortgesetzt wird (G), während für den Fall, dass der Fehlerparameter (fₚ) größer ist als der Grenzwert (g_{w}), das Verfahren in einen Lernmodus umgeschaltet wird, umfassend die folgenden Schritte:
- Einlesen (K) einer Positionsinformation (pᵢ') des zu entnehmenden Gebindes (11),
- Ändern von Parametern des neuronalen Netzwerks (nn₁, nn₂) durch Rückwärtsspeisen (L) des neuronalen Netzwerks (nn₁, nn₂) mit einem Differenzparameter (dₚ), welcher basierend auf der bestimmten Positionsinformation (pᵢ) und der eingelesenen Positionsinformation (pᵢ') bestimmt wird, und
- Entnehmen (M) des Gebindes (11) auf der Grundlage der eingelesenen Positionsinformation (pᵢ') mittels des Manipulators (19).

9. Verfahren nach einem der Ansprüche 1 bis 8, **dadurch gekennzeichnet, dass** das wenigstens eine neuronale Netzwerk (nn₁, nn₂) mit Soll-Trainingsdaten (tr_{d}) trainiert wird, wobei die Soll-Trainingsdaten (tr_{d}) Bilddaten (b_{d}) von wenigstens einem Gebinde (11) der Mehrzahl (12) an Gebinden (11) und hiermit korrespondierenden vordefinierten Positionsinformationen (pᵢ) von jeweils zu entnehmenden Gebinden (11) umfassen, umfassend die folgenden Trainingsschritte:
- Vorwärtsspeisen (O) des neuronalen Netzwerks (nn₁, nn₂) mit den Soll-Trainingsdaten (tr_{d}) unter Erhalt wenigstens einer ermittelten Positionsinformation (pᵢ) des zu entnehmenden Gebindes (11),
- Bestimmen (P) eines Fehlervektors (fᵥ) zwischen der ermittelten Positionsinformation (pᵢ) und der vordefinierten Positionsinformation (pᵢ), und
- Ändern von Parametern des neuronalen Netzwerks (nn₁, nn₂) durch Rückwärtsspeisen (S) des neuronalen Netzwerks (nn₁, nn₂) mit dem Fehlervektor (fᵥ), falls ein Qualitätsparameter (qₚ) des Fehlervektors (fᵥ) einen vordefinierten Wert (w) unterschreitet,
wobei die Soll-Trainingsdaten (tr_{d}) insbesondere Bilddaten (b_{d}) und vordefinierte Positionsinformation (pᵢ) einer Mehrzahl an Gebinden (11) in deren jeweils aktuellen Geometrie umfassen.

10. Verfahren nach Anspruch 9, **dadurch gekennzeichnet, dass** die zu dem Gebinde (11) korrespondierende, vordefinierte Positionsinformation (pᵢ) der Soll-Trainingsdaten (tr_{d}) aus mindestens einer Benutzereingabe bestimmt wird und insbesondere wenigstens ein Mitglied der folgenden Gruppe umfassen: Umriss, Raumposition und/oder Rotationszustand des zu entnehmenden Gebindes, Position einer Verschlussnaht, einer Oberseite und/oder einer Unterseite des zu entnehmenden Gebindes.

11. Vorrichtung zum Entnehmen eines nachgiebigen Gebindes (11) aus einer Mehrzahl (12) an Gebinden (11) mit wenigstens einer Kamera (27) zum Erzeugen von Bilddaten (b_{d}) von wenigstens einem Gebinde (11) der Mehrzahl (12) an Gebinden (11), einem programmtechnisch eingerichteten Manipulator (19) zum Entnehmen des Gebindes (11) und einer Steuereinheit (29), welche mit der Kamera (27)und dem Manipulator (19) verbunden ist, **dadurch gekennzeichnet, dass** die Steuereinheit (29) zur Durchführung eines Verfahrens nach einem der Ansprüche 1 bis 10 ausgebildet ist.

12. Vorrichtung nach Anspruch 11, **dadurch gekennzeichnet, dass**
- ein Gehäuse (14) zur Aufnahme der Mehrzahl (12) an Gebinden (11) vorgesehen ist, welches insbesondere eine Beleuchtungseinrichtung aufweist, und/oder
- wenigstens zwei, insbesondere wenigstens drei, Kameras (27) vorgesehen sind, welche in einer gemeinsamen Ebene angeordnet sind.

13. Vorrichtung nach Anspruch 11 oder 12, **dadurch gekennzeichnet, dass** wenigstens eine Kamera (27)
- an einer Oberseite (16) des Gehäuses (14) und/oder an einer Gehäusewand (15) angeordnet ist, wobei an dem Gehäuse (14) insbesondere wenigstens ein optischer Reflektor (33) angeordnet ist, und/oder
- an einer Greifeinrichtung (20) des programmtechnisch eingerichteten Manipulators (19) angeordnet ist, wobei die Greifeinrichtung (20) translatorisch und/oder rotatorisch beweglich ist.

14. Vorrichtung nach einem der Ansprüche 11 bis 13, **dadurch gekennzeichnet, dass**
- der Manipulator (19) von einem Roboter (19), insbesondere von einem sechsachsigen Industrieroboter (19), gebildet ist, und/oder
- eine Entleereinrichtung (21) vorgesehen ist, welche insbesondere mit einer Schneideinrichtung (23) zum Öffnen des entnommenen Gebindes (11) ausgestattet ist.

15. Computerprogramm mit Programmcodemitteln, welches eingerichtet ist, die Schritte eines Verfahrens nach einem der Ansprüche 1 bis 10 durchzuführen, wenn das Computerprogramm auf einem Computer oder einer entsprechenden Recheneinheit (29) ausgeführt wird, insbesondere auf einer Steuereinheit (29) einer Vorrichtung (10) nach einem der Ansprüche 11 bis 14.
